# EUROPEAN PATENT APPLICATION

(11) **EP 4 826 556 A1**
(43) Date of publication of application: **21.10.2026**
(21) Application number: 26169078.8
(22) Date of filing: 30.03.2026
(51) Int. Cl.: G06F 13/40

(54) **MULTIPLE COMPUTER SWITCH AND MULTI-COMPUTER SYSTEM**

(30) Priority: 17.04.2025 TW 114114640
(71) Applicant: BENQ Corporation, Taipei City 114 (TW)
(72) Inventor: CHIU, Hsien-Chu, Taipei City 114 (TW)
(74) Representative: dompatent

(57) **Abstract**

A multi-computer switch is provided by an aspect of the present disclosure. The multi-computer switch includes a first host connection module including a first bus and a first connection port configured to couple to a first computer device. The multi-computer switch also includes a second host connection module including a second bus, a second switch unit and a second connection port, and is configured to couple to a second computer device. The multi-computer switch also includes a switch module coupled to the first host connection module and the second switch unit. The multi-computer switch also includes a USB port module coupled to the second switch unit and the switch module, and including multiple USB ports configured to couple to an input device and an output device. The multi-computer switch also includes a controller coupled to the second switch unit and the switch module.

## Description

### TECHNICAL FIELD

The disclosure relates in general to multi-computer switches, and more particularly, to KVM multi-computer switches.

### BACKGROUND

Currently, there are various well-known KVM switches on the market, but most only support slower USB devices, such as USB 3.2. However, in such USB system architectures, due to their master-slave limitation, only one computer can be designated as the host and all others connected to the host are treated as devices. This restricts peer-to-peer applications between multiple computers. Thus, there are needs for techniques of KVM multi-computer switch that enables various applications of peer-to-peer communication between multiple computers.

### SUMMARY

The first aspect of the present disclosure features a multi-computer switch. The multi-computer switch includes a first host connection module including a first bus and a first connection port configured to couple to a first computer device. The multi-computer switch also includes a second host connection module including a second bus, a second switch unit and a second connection port, and is configured to couple to a second computer device. The multi-computer switch also includes a switch module coupled to the first host connection module and the second switch unit. The multi-computer switch also includes a USB port module coupled to the second switch unit and the switch module, and including multiple USB ports configured to couple to an input device and an output device. The multi-computer switch also includes a controller coupled to the second switch unit and the switch module. A first path is between the switch module and the first host connection module, a second path is between the switch module and the second switch unit, and a third path is between the USB port module and the second switch unit. The controller controls the second switch unit and the switch module to select whether only the first path is activated, only the second path is activated, or only the first path and the third path are activated.

The second aspect of the present disclosure features a multi-computer system. The multi-computer system includes a first computer device, a second computer device and a multi-computer switch. The multi-computer switch includes a first host connection module including a first bus and a first connection port configured to couple to the first computer device. The multi-computer switch also includes a second host connection module including a second bus, a second switch unit and a second connection port, and is configured to couple to the second computer device. The multi-computer switch also includes a switch module coupled to the first host connection module and the second switch unit. The multi-computer switch also includes a USB port module coupled to the second switch unit and the switch module, and including multiple USB ports configured to couple to an input device and an output device. The multi-computer switch also includes a controller coupled to the second switch unit and the switch module. A first path is between the switch module and the first host connection module, a second path is between the switch module and the second switch unit, and a third path is between the USB port module and the second switch unit. The controller controls the second switch unit and the switch module to select whether only the first path is activated, only the second path is activated, or only the first path and the third path are activated.

The details of one or more disclosed implementations are set forth in the accompanying drawings and the description below. Other features, aspects, and advantages will become apparent from the description, the drawings and the claims.

### BRIEF DESCRIPTION OF THE DRAWINGS

FIG. 1 is a function block diagram illustrating a system including an example KVM switch, according to on implementations of the present disclosure.
FIG. 2 is a function block diagram illustrating a system including another example KVM switch, according to some implementations of the present disclosure.
FIG. 3 is a function block diagram illustrating a system including yet another example KVM switch, according to some implementations of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

The present disclosure describes a functional and/or directly programmable processor that uses computer programs stored in the computer system's accessible memory and executable by the processor, utilizes dedicated logic hardware (including field-programmable gate arrays (FPGAs)), and uses various combinations thereof. Multiple functions are composable, can be executed in parallel, and/or can be executed in different sequences without affecting the achieved processing. In some cases, the rearranged multiple functions can only achieve the same result if certain other changes are also made simultaneously. In other cases, the rearranged multiple functions can only achieve the same result if specific conditions are met. Furthermore, for clarity, some flowcharts in this document omit certain unnecessary operations to understand the disclosed techniques. Multiple additional functions can be executed before, after, and/or between the described functions.

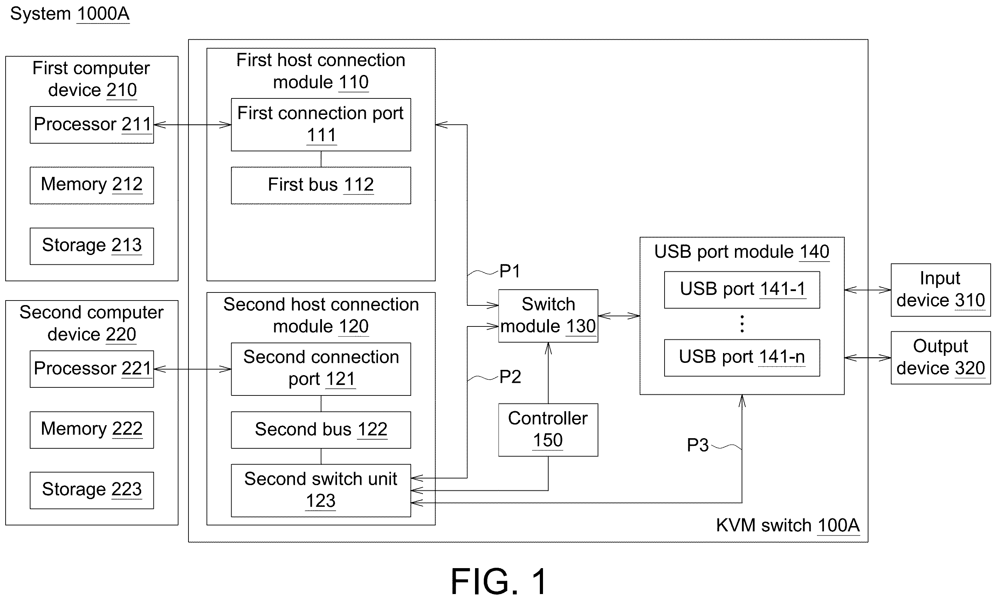

FIG. 1 is a function block diagram illustrating a system 1000A including an example KVM switch 100A, according to on implementations of the present disclosure. The system 1000A includes a KVM switch 100A, a first computer device 210, a second computer device 220, an input device 310 and an output device 320. The input device 310 and/or the output device 320 are coupled to the first computer device 210 and/or the second computer device 220 through the KVM switch 100A.

The first computer device 210 and the second computer device 220 may each be a desktop computer, notebook computer or other computer device having a processor (such as processor 211 or processor 221), memory (such as memory 212 or memory 222) and storage (such as storage 213 or storage 223). Processor 211 or processor 221 may each include one or more processing units, such as any combination of hardware units capable of executing programmable instructions, microprocessors, signal processors, graphics processors, Al processors and other similar devices. The one or more processing units may selectively include one or more internal registers (some of which are selectively architecturally visible), one or more caches, and/or one or more internal memories (such as with regard to buffering and/or merging). Memory 212 or memory 222 may each include one or more memory devices for storing instructions and/or data, with a data capacity greater than that of the processor's main memory. Storage 213 or storage 223 may include one or more storage elements, such as an SSD based on flash-based storage elements or an HDD based on rotating magnetic and/or optical non-volatile storage elements (such as platters), for storing instructions and/or data. Compared to HDDs, SSDs offer lower access latency but store less data. The cost per unit of storage 213 or storage 223 is lower than the cost per unit of memory 212 or memory 222.

The input device 310 may be, for example, a keyboard and a mouse. The input device 310 may be used as an input device for the first computer device 210 and/or the second computer device 220 via a KVM switch 100A, for example, using the input device 310 to operate the first computer device 210 via the KVM switch 100A. The output device 320 may be, for example, a monitor or other electronic devices that display or instructs content to the user. The output device 320 may be used as an output device for the first computer device 210 and/or the second computer device 220 via a KVM switch 100A, for example, using the output device 320 to display the content of the first computer device 210, such as the output screen of the operating system or application of the first computer device 210 via the KVM switch 100A.

The KVM switch 100A includes a first host connection module 110, a second host connection module 120, a switch module 130, a USB port module 140, and a controller 150.

The USB port module 140 is coupled to the switch module 130 and includes multiple USB ports (USB port 141-1 to USB port 141-n) configured to couple the input device 310 and the output device 320. In some implementations, the USB port module 140 is a USB port module that supports Thunderbolt 4/5 specifications.

The KVM switch 100A can be coupled to the first computer device 210 through the first host connection module 110. The first host connection module 110 is coupled to the switch module 130, and there is a first path P1 between the first host connection module 110 and the switch module 130. That is, the first host connection module 110 can be coupled to the USB port module 140 through the switch module 130 via the first path P1. The first host connection module 110 includes a first bus 112 and a first connection port 111. The first connection port 111 is used to couple to the first computer device 210, and may be, for example, a USB port or a USB-C port. In some implementations, the first host connection module 110 may be coupled to the switch module 130 through the first bus 112, that is, the first path P1 is located between the first bus 112 and the switch module 130. The first bus 112 includes one or more serial and/or parallel communication channels in various ways, as well as selective protocol conversion and/or adaptation capabilities to enhance communication between the components coupled thereto, and may be, for example, a high-speed bus that supports high bandwidth, such as a high-speed bus that supports 120 Gbps transmission speeds like Thunderbolt 4/5.

The KVM switch 100A can be coupled to the second computer device 220 via the second host connection module 120. The second host connection module 120 is coupled to the switch module 130 and the USB port module 140, and there are a second path P2 between the second host connection module 120 and the switch module 130, and a third path P3 between the second host connection module 120 and the USB port module 140. That is, the second host connection module 120 can be coupled to the USB port module 140 via the second path P2 through the switch module 130, and/or directly coupled to the USB port module 140 via the third path P3. The second host connection module 120 includes a second bus 122, a second switch unit 123, and a second connection port 121. The second connection port 121 is used to couple to the second computer device 220, and may be, for example, a USB port or a USB-C port. The second host connection module 120 can be coupled to the switch module 130 through the second switch unit 123, that is, the second path P2 is located between the second switch unit 123 and the switch module 130. The second bus 122 includes one or more serial and/or parallel communication channels in various ways, as well as selective protocol conversion and/or adaptation capabilities to enhance communication between the components coupled thereto. For example, it can be a high-speed bus that supports high bandwidth, such as a high-speed bus that supports 120 Gbps transmission speed, such as Thunderbolt 4/5.

The switch module 130 is coupled to the controller 150, and the switch module 130 can select activating or deactivating the first path P1 and/or the second path P2 through the controller 150. The controller 150 is also coupled to the second switch unit 123 of the second host connection module 120, and can control the second switch unit 123 to select activating or deactivating the third path P3.

The operation of the controller 150 and the selection of paths will be described below in three modes. In the first mode, the controller 150 controls the switch module 130 to only activate the first path P1 and deactivate the second path P2, and controls the second switch unit 123 to deactivate the third path P3. That is, in the first mode, only the first computer device 210 is connected to the USB port module 140 through the first host connection module 110 and the switch module 130, while the connection paths (second path P2 and third path P3) between the second host connection module 120 coupled to the second computer device 220 and the switch module 130 and the USB port module 140 are deactivated. Therefore, in the first mode, only the first computer device 210 is coupled to the input device 310 and the output device 320, that is, only the first computer device 210 can use the input device 310 (such as keyboard, mouse) to operate the screen of the output device 320 (such as display).

In the second mode, the controller 150 controls the switch module 130 to only activate the second path P2 and deactivate the first path P1, and controls the second switch unit 123 to deactivate the third path P3. That is, in the second mode, only the second computer device 220 is connected to the USB port module 140 through the second host connection module 120 and the switch module 130, while the connection path between the first host connection module 110 and the switch module 130 (first path P1) coupled to the first computer device 210, and the connection path between the second host connection module 120 and the USB port module 140 (third path P3) are both deactivated. Therefore, in the second mode, only the second computer device 220 is coupled to the input device 310 and the output device 320, that is, only the second computer device 220 can use the input device 310 (such as keyboard, mouse) to operate the screen of the output device 320 (such as display).

In the third mode, the controller 150 controls the switch module 130 to only activate the first path P1 and deactivate the second path P2, and controls the second switch unit 123 to activate the third path P3. That is, in the third mode, in addition to the first computer device 210 being connected to the USB port module 140 through the first host connection module 110 and the switch module 130, the second host connection module 120 coupled to the second computer device 220 is also connected to the USB port module 140 by activating the third path P3. Therefore, in the third mode, in addition to the first computer device 210 being coupled to the input device 310 and the output device 320, that is, only the first computer device 210 can use the input device 310 (such as keyboard, mouse) to operate the screen of the output device 320 (such as monitor), the first computer device 210 can also access the second computer device 220 through the USB port module 140, the third path P3 and the second host connection module 120, for example, using the first computer device 210 to access the data stored in the storage 223 of the second computer device 220, and/or using the first computer device 210 to access the processor 221 and/or memory 222 of the second computer device 220, so as to use the computing resources of the second computer device 220.

The interconnection between the first computer device 210 and the second computer device 220 can, for example, use Thunderbolt peer-to-peer transmission mode and employ the Ethernet over TBT transmission protocol, which can also be referred to as Thunderbolt Networking, a transmission mode defined in the Thunderbolt specification. In this case, no additional software or hardware (such as additional chips) is required; access between computer devices can be achieved simply by setting IP addresses and/or security permissions (such as folders to be shared).

Since the first computer device 210 can access the processor 221 and/or memory 222 of the second computer device 220 in the third mode described above, and use the computing resources of the second computer device 220, the first computer device 210 can be set as the master to be responsible for scheduling computing tasks, and the second computer device 220 can be set as the slave to provide its computing resources and perform distributed computing tasks.

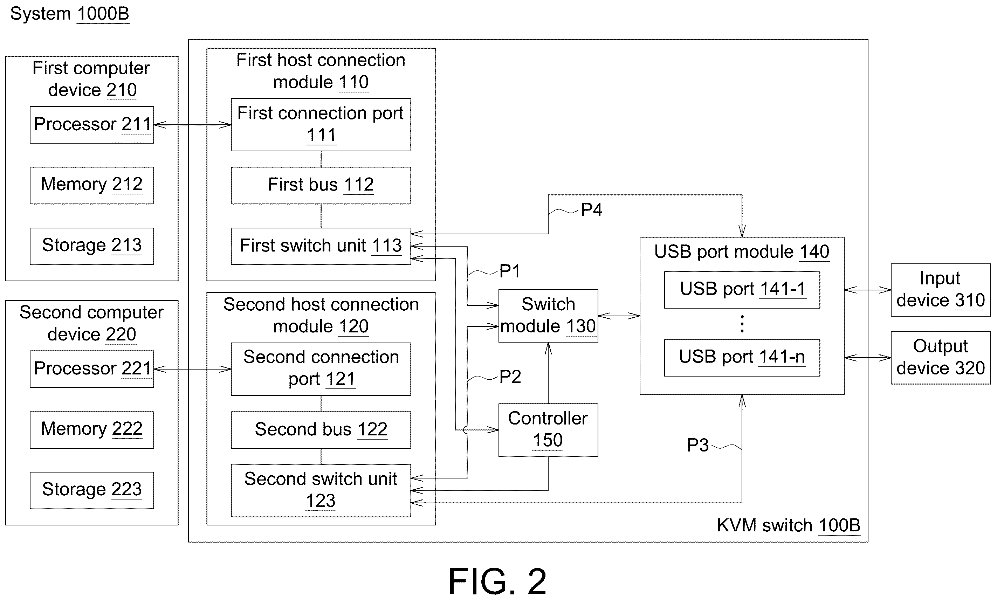

FIG. 2 is a function block diagram illustrating a system 1000B including another example KVM switch 100B, according to some implementations of the present disclosure. The KVM switch 100B in FIG.2 is similar to the KVM switch 100A in FIG. 1, and repeated components and functions are omitted here. The difference between the KVM switch 100B in FIG. 2 and the KVM switch 100A in FIG. 1 is that the first host connection module 110 includes a first switch unit 113, and the first host connection module 110 is coupled to the USB port module 140 through the fourth path P4. Similar to the second switch unit 123 of the second host connection module 120, the first host connection module 110 can be coupled to the switch module 130 through the first switch unit 113, that is, the first path P1 is located between the first switch unit 113 and the switch module 130, as shown in FIG. 2.

Since the KVM switch 100B has a first switch unit 113 and a fourth path P4, the operation of the controller 150 and the selection of paths will be described below in four modes. In the first mode, the controller 150 controls the switch module 130 to only activate the first path P1 and deactivate the second path P2, and controls the second switch unit 123 and the first switch unit 113 to deactivate the third path P3 and the fourth path P4. That is, in the first mode, only the first computer device 210 is connected to the USB port module 140 through the first host connection module 110 and the switch module 130. The connection paths (second path P2 and third path P3) between the second host connection module 120 and the switch module 130 and the USB port module 140, coupled to the second computer device 220, and the connection path (fourth path P4) between the first computer device 210 and the USB port module 140 are all deactivated. Therefore, in the first mode, only the first computer device 210 is coupled to the input device 310 and the output device 320, that is, only the first computer device 210 can use the input device 310 (such as keyboard, mouse) to operate the screen of the output device 320 (such as monitor).

In the second mode, the controller 150 controls the switch module 130 to only activate the second path P2 and deactivate the first path P1, and controls the second switch unit 123 and the first switch unit 113 to de activate the third path P3 and the fourth path P4. That is, in the second mode, only the second computer device 220 is connected to the USB port module 140 through the second host connection module 120 and the switch module 130, while the connection paths between the first host connection module 110 and the switch module 130 (first path P1), the connection path between the second host connection module 120 and the USB port module 140 (third path P3), and the connection path between the first computer device 210 and the USB port module 140 (fourth path P4) are all deactivated. Therefore, in the second mode, only the second computer device 220 is coupled to the input device 310 and the output device 320, that is, only the second computer device 220 can use the input device 310 (such as keyboard, mouse) to operate the screen of the output device 320 (such as display).

In the third mode, the controller 150 controls the switch module 130 to only activate the first path P1 and deactivate the second path P2, and controls the second switch unit 123 to activate the third path P3 and the first switch unit 113 to deactivate the fourth path. That is, in the third mode, in addition to the first computer device 210 being connected to the USB port module 140 through the first host connection module 110 and the switch module 130, the second host connection module 120 coupled to the second computer device 220 is also connected to the USB port module 140 by activating the third path P3. Therefore, in the third mode, in addition to the first computer device 210 being coupled to the input device 310 and the output device 320, that is, only the first computer device 210 can use the input device 310 (such as keyboard, mouse) to operate the screen of the output device 320 (such as monitor), the first computer device 210 can also access the second computer device 220 through the USB port module 140, the third path P3 and the second host connection module 120, for example, using the first computer device 210 to access the data stored in the storage 223 of the second computer device 220, and/or using the first computer device 210 to access the processor 221 and/or memory 222 of the second computer device 220, so as to use the computing resources of the second computer device 220.

In the fourth mode, the controller 150 controls the switch module 130 to only activate the second path P2 and deactivate the first path P1, and controls the first switch unit 113 to activate the fourth path P4 and the second switch unit 123 to deactivate the third path P3. That is, in the fourth mode, in addition to the second computer device 220 being connected to the USB port module 140 through the second host connection module 120 and the switch module 130, the first host connection module 110 coupled to the first computer device 210 is also connected to the USB port module 140 by activating the fourth path P4. Therefore, in the fourth mode, in addition to the second computer device 220 being coupled to the input device 310 and the output device 320, that is, the second computer device 220 being able to use the input device 310 (such as keyboard, mouse) to operate the screen of the output device 320 (such as monitor), the second computer device 220 can also access the first computer device 210 through the USB port module 140, the fourth path P4 and the first host connection module 110, for example, using the second computer device 220 to access the data stored in the storage 213 of the first computer device 210, and/or using the second computer device 220 to access the processor 211 and/or memory 212 of the first computer device 210, so as to use the computing resources of the first computer device 210.

Also, in the example of FIG. 2, the interconnection between the first computer device 210 and the second computer device 220 can, for example, use Thunderbolt peer-to-peer transmission mode and employ the Ethernet over TBT transmission protocol, which can also be referred to as Thunderbolt Networking, a transmission mode defined in the Thunderbolt specification. In this case, no additional software or hardware (such as additional chips) is required; access between computer devices can be achieved simply by setting IP addresses and/or security permissions (such as folders to be shared).

In the aforementioned third and fourth modes, the first computer device 210 can access the processor 221 and/or memory 222 of the second computer device 220 to use its computing resources, or the second computer device 220 can access the processor 211 and/or memory 212 of the first computer device 210 to use its computing resources. Therefore, for example, through Ray, an open-source distributed computing architecture, the first computer device 210 can be set as the master to schedule computing tasks, and the second computer device 220 can be set as the slave to provide its computing resources and perform distributed computing tasks.

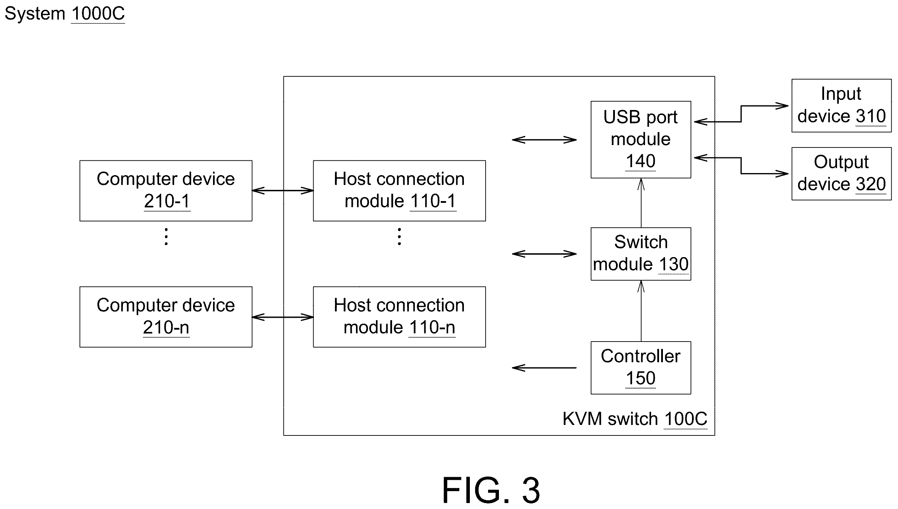

FIG. 3 is a function block diagram illustrating a system 1000C including yet another example KVM switch 100C, according to some implementations of the present disclosure. As discussed above, the KVM switch 100C may have more host connection modules, such as host connection modules 110-1 to host connection modules 110-n, to couple to more computer devices, such as computer device 210-1 to computer device 210-n. The switch units in each host connection module (such as the first switch unit 113 or the second switch unit 123 in FIG. 2) may be coupled to the controller 150, the switch module 130 (such as via the first path P1 or the second path P2 in FIG. 2), and the USB port module 140 (such as via the third path P3 or the fourth path P4 in FIG. 2). Similar to the examples in FIGs. 1 and 2, the controller 150 can control switch module 130 and switch units in each host connection module, and select different modes according to the various connection paths that are activated (turned on) and/or deactivated (turned off), so as to achieve the operation of a single computer device using the input device 310 and the output device 320 (such as the first mode and the second mode mentioned above), and the operation of the single computer device using the input device 310 and the output device 320 and accessing other computer devices (such as the third mode and the fourth mode mentioned above). In other words, the KVM switch techniques provided by implementations of the present disclosure enable more computer devices to perform mutual access operations based on different modes. Furthermore, the aforementioned Thunderbolt-related technologies can be applied, for example, to establish local Large Language Model (LLM) clusters for implementing artificial intelligence (AI) functions. Thus, the LLM cluster established using the KVM switch techniques provided by implementations of the present disclosure can provide higher computing power and significantly reduce operating costs. Specifically, the processors and/or memory of each computer device can be combined through Thunderbolt Networking to enhance the overall system's computing power.

It can be understood that although the present disclosure has been disclosed above by way of implementation, variation, embodiment and example, it is not intended to limit the present disclosure. Those skilled in the art to which this invention pertains can make various modifications and refinements without departing from the spirit and scope of the present disclosure. Therefore, the scope of protection of the present disclosure shall be determined by the appended claims.

## Claims

1. A multi-computer switch (100A), comprising:
a first host connection module (110), comprising a first bus (112) and a first connection port (111) configured to couple to a first computer device (210);
a second host connection module (120), comprising a second bus (122), a second switch unit (123) and a second connection port (121), and configured to couple to a second computer device (220);
a switch module (130), coupled to the first host connection module (110) and the second switch unit (123);
a USB port module (140), coupled to the second switch unit (123) and the switch module (130), and comprising a plurality of USB ports (141) configured to couple to an input device (310) and an output device (320); and
a controller (150), coupled to the second switch unit (123) and the switch module (130),
wherein a first path (P1) is between the switch module (130) and the first host connection module (110), a second path (P2) is between the switch module (130) and the second switch unit (123), and a third path (P3) is between the USB port module (140) and the second switch unit (123),
wherein the controller (150) controls the second switch unit (123) and the switch module (130) to select whether only the first path (P1) is activated, only the second path (P3) is activated, or only the first path (P1) and the third path (P3) are activated.

2. The multi-computer switch of claim 1, wherein the input device includes (310) a keyboard and/or a mouse, and the output device (320) includes a display.

3. The multi-computer switch of claims 1 or 2, wherein, when the controller (150) controls to activate only the first path (P1), the first computer device (210) is coupled to the USB port module (140) through the first host connection module (110) and the switch module (130), so that only the first computer device (210) communicates with the input device (310) and the output device (320).

4. The multi-computer switch of any of claims 1 to 3, wherein, when the controller (150) controls to activate only the second path (P2), the second computer device (220) is coupled to the USB port module (140) through the second host connection module (120) and the switch module (130), so that only the second computer device (220) communicates with the input device (310) and the output device (320).

5. The multi-computer switch of any of claims 1 to 4, wherein, when the controller (150) controls to activate only the first path (P1) and the third path (P3), the first computer device (210) is coupled to the USB port module (140) through the first host connection module (110) and the switch module (130), and coupled to the second computer device (220) through the third path (P3), so that only the first computer device (210) communicates with the input device (310) and the output device (320), and that the first computer device (210) accesses the second computer device (220) by operating the input device (310) and the output device (320).

6. The multi-computer switch of any of claims 1 to 5, wherein both the first bus (112) and the second bus (122) are Thunderbolt 4/5 high-speed buses, and the first computer device (210) accesses the second computer device (220) through the Thunderbolt peer-to-peer function of the USB port module (140), setting both the first computer device (210) and the second computer device (220) as hosts.

7. The multi-computer switch of any of claims 1 to 5, wherein the first computer device (210) accesses the second computer device (220) by accessing data stored in a storage device (223) of the second computer device (220), and by accessing a processor (221) and a memory (222) of the second computer device (220) to use the computing resources of the second computer device (220).

8. The multi-computer switch of any of claims 1 to 7, wherein the first host connection module (110) comprises a first switch unit (113), and the first host connection module (110) is coupled to the switch module (130) through the first switch unit (113) to form the first path (P1),
wherein the first switch unit (113) is coupled to the USB port module (140) and the controller (150), and a fourth path (P4) is between the first switch unit (113) and the USB port module (140),
wherein the controller (150) controls the first switch unit (113), the second switch unit (123) and the switch module (130) to select whether only the second path (P2) and the fourth path (P4) are activated.

9. The multi-computer switch of claim 8, wherein, when the controller (150) controls to activate only the second path (P2) and the fourth path (P4), the second computer device (220) is coupled to the USB port module (140) through the second host connection module (120) and the switch module (130), and coupled to the first computer device (210) through the fourth path (P4), so that only the second computer device (220) communicates with the input device (310) and the output device (320), and that the second computer device (220) accesses the first computer device (210) by operating the input device (310) and the output device (320).

10. The multi-computer switch of claim 9, wherein both the first bus (112) and the second bus (122) are Thunderbolt 4/5 high-speed buses, and the second computer device (220) accesses the first computer device (210) through the Thunderbolt peer-to-peer function of the USB port module (140), setting both the first computer device (210) and the second computer device (220) as hosts.

11. The multi-computer switch of claim 9, wherein the second computer device (220) accesses the first computer device (210) by accessing data stored in a storage device (213) of the first computer device (210), and by accessing a processor (211) and a memory (212) of the first computer device (210) to use the computing resources of the first computer device (210).

12. A multi-computer system (1000A), comprising:
a first computer device (210);
a second computer device (220); and
the multi-computer switch (100A) of any of claims 1 to 11.
